# EUROPEAN PATENT SPECIFICATION

(11) **EP 1 838 427 B1**
(45) Date of publication and mention of the grant of the patent: **04.06.2008**
(21) Application number: 05820462.9
(22) Date of filing: 13.12.2005
(51) Int. Cl.: B01J 13/00, B01F 17/00, C09D 11/02, C09D 201/08, C09C 3/10

(54) **PROCESS FOR PREPARING AN ENCAPSULATED PARTICULATE SOLID**
VERFAHREN ZUR HERSTELLUNG EINES VERKAPSELTEN TEILCHENFÖRMIGEN FESTSTOFFS
PROCEDE DE PREPARATION D'UN SOLIDE PARTICULAIRE ENCAPSULE

(30) Priority: 18.12.2004 GB 0427747
(43) Date of publication of application: 03.10.2007
(73) Proprietor: FUJIFILM Imaging Colorants Limited, Blackley, Manchester M9 8ZS (GB)
(72) Inventor: O'DONNELL, John, Patrick, Blackley, Manchester M9 8ZS (GB); PARROTT, Nicola, Fiona, Blackley, Manchester M9 8ZS (GB); ANNABLE, Tom, Blackley, Manchester M9 8ZS (GB)
(74) Representative: Mayall, John
(86) International application number: PCT/GB2005/004767
(87) International publication number: WO 2006/064193

(56) References cited:
- US-B1- 6 262 152
- US-B1- 6 395 805
- PATENT ABSTRACTS OF JAPAN vol. 1997, no. 08, 29 August 1997 (1997-08-29) & JP 09 104834 A (DAINIPPON INK & CHEM INC), 22 April 1997 (1997-04-22)
- PATENT ABSTRACTS OF JAPAN vol. 1999, no. 11, 30 September 1999 (1999-09-30) & JP 11 152424 A (DAINIPPON INK & CHEM INC), 8 June 1999 (1999-06-08)

## Description

This invention relates to a process for preparing an encapsulated particulate solid dispersed in a liquid medium, to the isolated encapsulated particulate solid and to the use of such solids in inks, especially ink jet printing inks.

Many inks, mill-bases, paints and the like require effective dispersants for uniformly dispersing a particulate solid in a liquid vehicle. The liquid vehicle may vary from highly polar (e.g. water) to highly non-polar liquids (e.g. toluene). Known dispersants tend to work effectively only with liquid vehicles within a range of polarities. Outside such polarities the particulate solid typically flocculates. Thus, a range of dispersants has been developed for liquid media of different polarities. Preparing dispersants which can successfully stabilise a particulate solid in a liquid medium comprising water and substantial amounts of organic solvents is particularly difficult.

Conventional dispersants are adsorbed onto the surface of the particulate solid by physical interactions. Many conventional dispersants suffer from a disadvantage in that they may readily be displaced from the surface of the particulate solid by a more strongly adsorbing material and this can result in destabilisation of the dispersion and flocculation.

The problems associated with conventional dispersants can be partly addressed by encapsulating the particulate solid within a cross-linked dispersant. The process of encapsulating a particulate solid with a cross-linked dispersant is typically performed in a liquid medium. A cross-linkable dispersant can be mixed with a particulate solid dispersed in a liquid medium, the dispersant then adsorbs onto the particulate solid surface and the dispersant can then be cross-linked via its cross-linkable groups utilising a cross-linking agent to "fix" the dispersant onto the particulate solid. Such an approach is described in US 6,262,152, WO 00/20520, JP 1997104834, JP 1999-152424 and EP 732,381.

We have found that known encapsulation approaches suffer from deficiencies. Specifically, the resultant encapsulated particulate solids often do not have the stability desired for use in inks for ink jet printers. Stability is very important for ink jet printing inks because any precipitated matter can easily block the fine nozzles.

We have also found that the high temperatures (above 100°C) which are often employed to effect cross-linking may destabilise, aggregate and/or flocculate the particulate solid. This results in an increase in the average particle size of the encapsulated particulate solid and may even form undesirable aggregated and/or flocculated material. Thus, there are practical difficulties in preparing finely dispersed, stable encapsulated particulate solids. The isocyanate/hydroxyl process described in WO 00/20520 or the isocyanate/amine process described in EP 732,381 can be mentioned as examples of achieving cross-linking at temperatures below 100°C. However some isocyanates are regarded as having an undesirable toxicology profile.

Thus, there is a need for a process for preparing an encapsulated particulate solid dispersion without using isocyanate cross-linkers and which can provide a finely dispersed, stable encapsulated particulate solid.

According to a first aspect of the present invention there is provided a process for preparing an encapsulated particulate solid dispersed in a liquid medium comprising cross-linking a dispersant with a cross-linking agent in the presence of a particulate solid and the liquid medium, thereby encapsulating the particulate solid within the cross-linked dispersant, wherein:
a) the dispersant adsorbs onto the particulate solid prior to cross-linking and the dispersant has at least one carboxylic acid group; and
b) the cross-linking agent has at least two epoxy groups;
wherein the cross-linking agent has one or more oligomeric dispersing group and/or the dispersant has an acid value from 130 to 320 mg KOH/g.

In one embodiment the cross-linking reaction between the carboxylic acid and epoxy groups is performed at a temperature of less than 100°C and a pH of at least 6.

The particulate solid may comprise and preferably is an inorganic or organic particulate solid material or mixture thereof which is insoluble in the liquid medium.

Examples of suitable particulate solids are inorganic and organic pigments; extenders a nd fillers for paints a nd plastics materials; disperse dyes and water-soluble dyes in liquid media which do not dissolve said dyes; optical brightening agents; textile auxiliaries for solvent dyebaths, inks and other solvent application system; particulate ceramic materials; magnetic particles (e.g. for use in magnetic recording media); biocides; agrochemicals; and pharmaceuticals.

Preferably the particulate solid is a colorant, more preferably a pigment.

A preferred particulate pigment is an organic pigment, for example any of the classes of pigments described in the Third Edition of the Colour Index (1971) and subsequent revisions of, and supplements thereto, under the chapter headed "Pigments". Examples of organic pigments are those from the azo (including disazo and condensed azo), thioindigo, indanthrone, isoindanthrone, anthanthrone, anthraquinone, isodibenzanthrone, triphendioxazine, quinacridone and phthalocyanine series, especially copper phthalocyanine and its nuclear halogenated derivatives, and also lakes of acid, basic and mordant dyes. Carbon black, although often regarded as being inorganic, behaves more like an organic pigment in its dispersing properties and is another example of a suitable particulate solid. Preferred organic pigments are phthalocyanines, especially copper phthalocyanine pigments, azo pigments, indanthrones, anthanthrones, quinacridones and carbon black pigments.

Preferred inorganic particulate solids include: extenders and fillers, e.g. talc, kaolin, silica, barytes and chalk; particulate ceramic materials, e.g. alumina, silica, zirconia, titania, silicon nitride, boron nitride, silicon carbide, boron carbide, mixed silicon-aluminium nitrides and metal titanates; particulate magnetic materials e.g. magnetic oxides of transition metals, especially iron and chromium. e.g. gamma-Fe₂O₃, Fe₃O₄, and cobalt-doped iron oxides, calcium oxide, ferrites, especially barium ferrites; and metal particles, especially metallic iron, nickel, cobalt and alloys thereof.

Where the process of the present invention is used to make encapsulated particulate solid dispersions for use in inks, for example ink jet printing inks, the pigment is preferably a cyan, magenta, yellow or black pigment. The particulate solid may be a single chemical species or a mixture comprising two or more chemical species (e.g. a mixture comprising two or more different pigments). In other words, two or more different particulate solids may be used in the process of the present invention.

The liquid medium may be non-polar but is preferably polar. "Polar" liquid media are generally capable of forming moderate to strong bonds, e.g. as described in the article entitled "A Three Dimensional Approach to Solubility" by Crowley et al in Journal of Paint Technology, Vol. 38, 1966, at page 269. Polar liquid media generally have a hydrogen bonding number of 5 or more as defined in the abovementioned article.

Examples of suitable polar liquid media include ethers, glycols, alcohols, polyols, amides and especially water.

Preferably, the liquid medium is or comprises water as this tends to result in a particularly stable and fine encapsulated particulate solid. Preferably, the liquid medium comprises from 1 to 100%, more preferably from 10 to 100%, especially from 20 to 90% and more especially from 30 to 80% water by weight. The remainder is preferably one or more polar organic liquids.

Preferred non-polar liquid media include non-halogenated aromatic hydrocarbons (e.g. toluene and xylene); halogenated aromatic hydrocarbons (e.g. chlorobenzene, dichlorobenzene and chlorotoluene); non-halogenated aliphatic hydrocarbons (e.g. linear and branched aliphatic hydrocarbons containing six or more carbon atoms, including fully and partially saturated), halogenated aliphatic hydrocarbons (e.g. dichloromethane, carbon tetrachloride, chloroform, trichloroethane); natural non-polar liquids (e.g. vegetable oil, sunflower oil, linseed oil, terpenes and fatty glycerides); and combinations thereof.

The liquid medium may comprise a mixture of liquids which may be polar or non-polar liquids. It is preferred that at least one component of the liquid medium is a polar liquid and more preferred that all of the components of the liquid medium are polar liquids.

When the liquid medium comprises more than one liquid said liquid medium may be in the form of a multi phase liquid (e.g. a liquid-liquid emulsion) but is preferably in the form of a single phase (homogeneous) liquid.

Preferably, the polar liquids other than water are water-miscible.

In a preferred embodiment the liquid medium comprises water and a water-miscible organic liquid. Such a liquid medium is preferred because it assists in dissolving and/or dispersing a wider range of cross-linking agents

Preferred water-miscible organic liquids for inclusion into the liquid medium include C₁₋₆-alkanols, preferably methanol, ethanol, n-propanol, isopropanol, n-butanol, sec-butanol, tert-butanol, n-pentanol, cyclopentanol and cyclohexanol; linear amides, preferably dimethylformamide or dimethylacetamide; water-miscible ethers, preferably tetrahydrofuran and dioxane; diols, preferably diols having from 2 to 12 carbon atoms, for example ethylene glycol, propylene glycol, butylene glycol, pentylene glycol, hexylene glycol and thiodiglycol and oligo- and poly-alkyleneglycols, preferably diethylene glycol, triethylene glycol, polyethylene glycol and polypropylene glycol; triols, preferably glycerol and 1,2,6-hexanetriol; mono-C₁₋₄-alkyl ethers of diols, preferably mono-C₁₋₄-alkyl ethers of diols having 2 to 12 carbon atoms, especially 2-methoxyethanol, 2-(2-methoxyethoxy)ethanol, 2-(2-ethoxyethoxy)-ethanol, 2-[2-(2-methoxyethoxy) ethoxy]ethanol, 2-[2-(2-ethoxyethoxy)-ethoxy]-ethanol and ethyleneglycol monoallylether-, cyclic amides, preferably 2-pyrrolidone, N-methyl-2-pyrrolidone, N-ethyl-2-pyrrolidone, caprolactam and 1,3-dimethylimidazolidone.

Preferably the liquid medium comprises water and 2 or more, especially from 2 to 8, water-miscible organic liquids.

Especially preferred water-miscible organic liquids are cyclic amides, especially 2-pyrrolidone, N-methyl-pyrrolidone and N-ethyl-pyrrolidone; diols, especially 1,5-pentane diol, ethyleneglycol, thiodiglycol, diethyleneglycol and triethyleneglycol; and mono- C₁₋₄-alkyl and C₁₋₄-alkyl ethers of diols, more preferably mono- C₁₋₄-alkyl ethers of diols having 2 to 12 carbon atoms, especially 2-methoxy-2-ethoxy-2-ethoxyethanol; and glycerol.

The weight ratio of water to water-miscible organic liquid when both are present in the liquid medium is preferably from 99:1 to 5:95, more preferably 95:5 to 50:50, especially 95:5 to 75:25.

Preferably, the liquid medium is not reactive towards either the cross-linking agent or the dispersant. Thus, it is preferred that the liquid medium is substantially free from components having amine, imine, thiol, carboxylic acid or epoxy groups.

The dispersant preferably has two or more and especially ten or more carboxylic acid groups per molecule.

When the cross-linking agent has two epoxy groups it is preferred that the dispersant has ten or more carboxylic acid groups.

The carboxylic acid group(s) may be present in the dispersant in the form of a free acid (-COOH) or in the form of a salt. The salt may be, for example, a metal ion, an ammonium, substituted ammonium, quaternary ammonium or pyridinium salt.

Preferably, the dispersant comprises and more preferably is a polymer. Preferably the dispersant comprises and more preferably is a polyurethane, polyester or more preferably a polyvinyl dispersant. The dispersant may be a combination of polymers which may be physically blended or chemically bonded together (e.g. grafted).

The carboxylic acid group(s) are preferably incorporated into the polymeric dispersant by means of copolymerising a monomer containing at least one carboxylic acid group. Preferred polyvinyl dispersants comprise at least one monomer residue from itaconic acid, maleic acid, fumaric acid, crotonic acid, more preferably methacrylic acid, acrylic acid and beta carboxy ethyl acrylate.

In the case of polyurethanes, the preferred method of incorporating carboxylic acid groups is by copolymerising a diol having a hindered carboxylic acid group. A preferred example of such a diol is dimethylol propanoic acid.

Polyesters having at least one carboxylic acid group can be prepared by reacting a diol monomer with an excess of a dicarboxylic acid monomer. Carboxylic acid group(s) can also be incorporated by copolymerising a diol having a hindered carboxylic acid group (as mentioned above) with a dicarboxylic acid monomer.

The function of the carboxylic acid group(s) in the dispersant is primarily to cross-link with the epoxy groups in the cross-linking agent. In addition, any unreacted carboxylic acid groups may assist in the stabilisation of the final encapsulated particulate solid against flocculation and aggregation. Carboxylic acid groups are effective as stabilising groups in polar and more especially aqueous media.

Where carboxylic acid group(s) are the only groups for stabilising the final encapsulated particulate solid dispersed in the liquid medium it is preferable to have a molar excess of carboxylic acid groups to epoxy groups to ensure that unreacted carboxylic acid groups remain after the cross-linking reaction has been completed. In one embodiment the ratio of moles of carboxylic acid groups to moles of epoxy groups is preferably from 10:1 to 1.1:1, more preferably from 5:1 to 1.1:1 and especially preferably from 3:1 to 1.1:1

The dispersant may optionally have other stabilising groups. The choice of the stabilising groups as well as the amounts of such groups will depend to a large extent on the nature of the liquid medium. Stabilising groups tend to be either hydrophilic in nature (e.g. for polar media) or hydrophobic in nature (e.g. for non-polar media).

Preferred polymeric dispersants are derived from both hydrophilic and hydrophobic monomers.

Hydrophilic monomers are those monomers comprising hydrophilic groups which may be ionic or non-ionic groups. The ionic groups may be cationic but are preferably anionic. Both cationic and anionic groups may be present in the dispersant to give amphoteric stabilisation. Preferred anionic groups are phenoxy, sulphonic acid, sulphuric acid, phosphonic, polyphosphoric and phosphoric acid groups which may be in the free acid or salt form as hereinbefore described. Preferred cationic groups are quaternary ammonium, benzalkonium, guanidine, biguanidine and pyridinium. These can be in the form of a salt such as a hydroxide, sulphate, nitrate, chloride, bromide, iodide and fluoride. Preferred non-ionic groups are glucoside, saccharide, pyrrolidone, acrylamide and especially hydroxy groups and poly(akyleneoxide) groups, more preferably poly(ethyleneoxide) or poly(propyleneoxide) groups, especially groups of the formula - (CH₂CH₂O)ₙH or -(CH₂CH₂O)ₙC₁₋₄-alkyl wherein n is from 3 to 200 (preferably 4 to 20). The dispersant can contain a single non-ionic group, several non-ionic groups throughout the dispersant or one or more polymeric chains containing non-ionic groups. Hydroxy groups can be incorporated using polymeric chains such as polyvinylalcohol, polyhydroxyl functional acrylics and celluloses. Ethyleneoxy groups can be incorporated using polymeric chains such as polyethyleneoxide.

Hydrophobic monomers are those monomers comprising hydrophobic groups.

Preferred hydrophobic groups are predominantly hydrocarbons, fluorocarbons, poly C₃₋₄-alkyleneoxy and alkyl siloxanes comprising less than three and more preferably no hydrophilic groups. The hydrophobic group is preferably a C₃-C₅₀ chain or propyleneoxide which can be pendant or in chain with the hydrophobic monomer.

In the case of a polymeric dispersant this may be a homopolymer, but is more preferably a copolymer.

The polymeric dispersants preferably comprise random polymers (having statistically short blocks or segments) but can comprise block or graft polymers (having longer blocks or segments). Polymeric dispersants may also comprise alternating polymers. The polymeric dispersants can be branched or star but are preferably linear. The polymeric dispersants may have two or more segments (e.g. block and graft copolymers) but are preferably random.

In embodiments where the polymeric dispersant has two or more segments it is preferred that at least one segment is hydrophobic and at least one segment is hydrophilic relative to each other. A preferred method for making hydrophilic and hydrophobic segments is by the copolymerisation of hydrophilic and hydrophobic monomers respectively. Where the dispersant has at least one hydrophilic and at least one hydrophobic segment the carboxylic acid group(s) can be situated in the hydrophobic segment, in the hydrophilic segment or in both.

Polyvinyl dispersants may be made by any suitable means. A preferred method for making polyvinyl dispersants is free radical polymerisation of vinyl monomers, especially (meth)acrylates and vinyl monomer containing aromatic groups such as vinyl naphthalene and especially styrenic monomers. Suitable free radical polymerisation methods include but are not limited to suspension, solution, dispersion and preferably emulsion polymerisation. Preferably, the vinyl polymerisation is carried out in a liquid composition comprising water.

Preferred polyvinyl dispersant comprise the residues from one or more (meth)acrylate monomers.

Preferably the polyvinyl dispersant is a copolymer.

Copolyvinyl dispersants which contain the residue of both hydrophilic and hydrophobic monomers are preferably substantially free from segments. Copolyvinyl dispersants can be made, for example, by free radical copolymerisation methods wherein the segment length is often statistically very short or effectively non-existent. Such are often referred to as "random" polymerisations. Copolyvinyl dispersants having segments can be made by polymerisation methods such as living polymerisations and especially group transfer polymerisation, atom transfer polymerisation, macromonomer polymerisation, graft polymerisation and anionic or cationic polymerisation.

Suitable hydrophilic vinyl monomers include non-ionic and ionic vinyl monomers.

Preferred non-ionic vinyl monomers are those containing saccharide, glucoside, amide, pyrrolidone and especially hydroxy and ethoxy groups.

Preferred examples of non-ionic vinyl monomers include hydroxy ethylacrylate, hydroxy ethyl methacrylate, vinyl pyrrolidone, ethoxylated (meth)acrylates and (meth)acrylamides.

Suitable ionic vinyl monomers may be cationic but are preferably anionic.

Preferred anionic vinyl monomers are those comprising phosphoric acid groups and/or sulphonic acid groups which may be in the free acid form or salts thereof. The types of salts are as described hereinbefore. Preferred examples are styrenesulfonic acid, vinylbenzylsulfonic acid, vinylsulfonic acid, acryloyloxyalkyl sulfonic acids (for example, acryloyloxymethyl sulfonic acid, acryloyloxyethyl sulfonic acid, acryloyloxypropyl sulfonic acid and acryloyloxybutyl sulfonic acid), methacryloyloxymethyl sulfonic acid, methacryloyloxyethyl sulfonic acid, methacryloyloxypropyl sulfonic acid and methacryloyloxybutyl sulfonic acid), 2-acrylamido-2-alkylalkane sulfonic acids (for example, 2-acrylamido-2-methylethanesulfonic acid, 2-acrylamido-2-methylpropanesulfonic acid and 2-acrylamido-2-methylbutane sulfonic acid), 2-methacrylamido-2-alkylalkane sulfonic acids (for example, 2-methacrylamido-2-methylethanesulfonic acid, 2-methacrylamido-2-methylpropanesulfonic acid and 2-methacrylamido-2-methylbutanesulfonic acid), mono-(acryloyloxyalkyl)phosphates (for example, mono(acryloyloxyethyl)phosphate and mono(3-acryloyloxypropyl)phosphates) and mono(methacryloyloxyalkyl)phosphates (for example, mono(methacryloyloxyethyl)phosphate and mono(3-methacryloyloxypropyl)phosphate).

Preferred cationic vinyl monomers are those comprising quaternary amine, pyridine, guanidine and biguanidine groups.

Preferred hydrophobic vinyl monomers have no hydrophilic groups. Preferred hydrophobic vinyl monomers include C₁₋₂₀-hydrocarbyl (meth)acrylates, butadiene, styrene and vinyl naphthalene. Especially preferred are C₄₋₂₀-hydrocarbyl (meth)acrylates for example butyl (meth)acrylate, octyl (meth)acrylate, 2-ethyl hexyl (meth) acrylate, isobornyl acrylate, lauryl acrylate and stearyl acrylate. A particularly preferred hydrophobic vinyl monomer is 2-ethyl hexyl methacrylate. The hydrocarbyl groups in these hydrophobic vinyl monomers may be branched but are preferably linear.

Polyesters are typically made by esterification of a dicarboxylic acid with a diol. In place of the carboxylic acid an acid chloride, anhydride or alky (typically methyl or ethyl) ester of the acid can be used. Small amounts of monofunctional and/or tri or higher functional monomers can be used. Mixtures of carboxylic acids and/or alcohols can be used. Another route to the preparation of polyesters is the well known ring opening of cyclic lactones such as caprolactone. Caprolactone can be polymerised to give diols which may be used in both polyester or polyurethane synthesis.

Preferred hydrophobic monomers for making polyesters are esters, acids, acid chlorides anhydrides, cyclic lactones and alcohols containing C₁₋₅₀-hydrocarbylene more preferably C₄₋₅₀-hydrocarbylene, and especially C₆₋₂₀-hydrocarbylene residues. These hydrocarbylene residues preferably comprise alkylene, cycloalkylene, arylene, aralkylene and/or alkarylene residues. Hydrophobic monomers preferably contain no hydrophilic groups other than those needed for the polyester polymerisation. Other preferred hydrophobic monomers include those containing C₃₋₄-alkyleneoxy (especially propyleneoxy), fluorocarbons and siloxanes. Hydrophobic urethanes, polycarbonates and polyvinyls can be prepared with carboxylic acid or hydroxy groups such that they may be incorporated into polyesters.

Preferred hydrophilic monomers for making polyesters contain hydroxy groups and/or acid groups which are unreacted, or ethyleneoxy groups. Especially preferred are polyethyleneoxy diols.

Suitable hydrophilic monomers for making polyesters may comprise sulphonic acid with hydroxy and/or carboxylic acid groups, for example aromatic dicarboxylic acids having an ionised sulphonate group. Particularly preferred is sodio-5-sulphoisophthalic acid (SSIPA). Other useful monomers which have two or more groups which readily undergo an ester condensation reaction and have one or more sulphonic acid groups are dihydroxy aryl monomers having at least one sulphonic acid group.

A further method for introducing hydrophilic residues is to incorporate polyester monomers containing protected hydrophilic groups (such as silylated hydroxyl groups) which are de-protected after polymerisation. The advantage of protection/de-protection is that the molecular weight and remaining acid/hydroxy functionality can be separately controlled.

Polyurethanes are preferably made by the condensation of a di-isocyanate with a diol. Small amounts of monofunctional and/or tri or higher functional monomers can be used. Mixtures of isocyanates and/or alcohols can be used.

Preferred hydrophobic monomers for making polyurethanes include isocyanates and alcohols comprising C₁₋₅₀-hydrocarbylene more preferably C₄₋₅₀-hydrocarbylene, and especially C₆₋₂₀-hydrocarbylene residues. Hydrocarbylene residues can comprise alkylene, cycloalkylene, arylene, aralkylene and/or alkarylene residues. Preferably the hydrophobic monomers contain no hydrophilic group other than those needed for the urethane polymerisation. Other preferred hydrophobic monomers for making polyurethanes contain siloxane and fluorocarbon groups. Hydrophobic polycarbonates, polyesters and polyvinyls can be prepared with isocyanate or hydroxy groups such that they can be incorporated into a polyurethane.

Examples of suitable hydrophobic isocyanates include ethylene diisocyanate, 1,6-hexamethylene diisocyanate, isophorone diisocyanate, tetramethylxylene diisocyanate, 1,4-phenylene diisocyanate, 2,4-toluene diisocyanate, 2,6-toluene diisocyanate, 4,4'-diphenyl-methane diisocyanate and its hydrogenated derivative, 2,4'-diphenylmethane diisocyanate and its hydrogenated derivative, and 1,5-naphthylene diisocyanate. Mixtures of the polyisocyanates can be used, particularly isomeric mixtures of the toluene diisocyanates or isomeric mixtures of the diphenylmethane diisocyanates (or their hydrogenated derivatives), and also organic polyisocyanates which have been modified by the introduction of urethane, allophanate, urea, biuret, carbodiimide, uretonimine or isocyanurate residues.

Preferred hydrophobic alcohols contain C₃₋₄-alkyleneoxy (especially propyleneoxy), fluorocarbon, siloxane, polycarbonate and C₁₋₂₀-hydrocarbyl poly (meth)acrylate residues.

Preferred examples of hydrophobic diols for making polyurethanes include hexane diol, cyclohexane diol, propyleneoxy diols, diols from polycaprolactone, diols from polyvalerolactone, polyC₁₋₂₀-alkyl (meth)acrylate diols, siloxane diols, fluorocarbon diols and alkoxylated bisphenol A diols.

Preferred hydrophilic monomers for making polyurethanes contain ethyleneoxy, sulphonic acid, phosphoric acid or quaternary ammonium groups. A preferred example of a monomer containing a sulphonic acid group is bis(2-hydroxyethyl)-5-sodiosulphoisophthalate. Preferred examples of such monomers containing quaternary ammonium groups are quaternary ammonium salt diols for example dimethanol diethyl ammonium bromide. The acidic and/or quaternary ammonium group may be in the form of a salt as hereinbefore described. A preferred polyurethane monomer containing an ethyleneoxy groups is polyethyleneoxide diol and especially the polyoxalkyene amines as described in EP 317,258 the teaching of which is incorporated herein.

Hydrophilic residues can be introduced into polyurethanes by using excess hydroxy groups over isocyanate groups so that the resulting hydrophilic polyurethanes have unreacted hydroxy groups after polymerisation. Also, monomers containing protected hydrophilic groups such as silylated hydroxy groups can also be used. Said protected groups can be de-protected after polymerisation.

The dispersant is preferably chosen to suit the liquid medium to be used in the process for preparing the encapsulated particulate solid and also the liquid vehicle to be used in any final intended composition in which the encapsulated particulate solid will be used (e.g. inks). Thus, for example, when the encapsulated particulate solid is to be used in an aqueous ink jet printing ink the dispersant preferably has a predominantly hydrophilic character. Similarly, when the encapsulated particulate solid is to be used in an oil-based (non-aqueous) paint or ink the dispersant preferably has a predominantly hydrophobic character.

In embodiments where the cross-linking agent has one or more oligomeric dispersing group the dispersant may have any acid value provided that it remains a dispersant in character and provided that the dispersant has sufficient carboxylic acid groups to be effectively cross-linked with the cross-linking agent

In embodiments where the cross-linking agent has one or more oligomeric dispersing group the dispersant preferable has acid value of at least 125mg KOH/g.

In all embodiments the acid value (AV) of the dispersant is preferably from 130 to 320 and more preferably from 135 to 250 mg KOH/g. We have found that dispersants having such acid values provide resultant encapsulated particulate solid which exhibits improved stability. This improved stability is especially useful in the demanding liquid vehicles used in ink jet printing, with more difficult to disperse particulate solids and with cross-linking agents which have little and especially no oligomeric dispersing groups.

Preferably, the dispersant has a number average molecular weight of from 500 to 100,000, more preferably from 1,000 to 50,000 and especially from 1,000 to 35,000. The molecular weight is preferably measured by gel permeation chromatography ("GPC").

The dispersant need not be totally soluble in the liquid medium. That is to say perfectly clear and non-scattering solutions are not essential. The dispersant may aggregate in surfactant-like micelles giving slightly hazy solutions in the liquid medium. The dispersant may be such that some proportion of the dispersant tends to form a colloid or micellar phase. It is preferred that the dispersant produces uniform and stable dispersions in the liquid medium which do not settle or separate on standing.

It is preferred that the dispersant is substantially soluble in the liquid medium giving rise to clear or hazy solutions.

Preferred random polymeric dispersants tend to give clear compositions whilst less preferred polymeric dispersants with two or more segments tend to give rise to the aforementioned hazy compositions in liquid media.

An important feature of the present invention is that the dispersant adsorbs onto the particulate solid prior to cross-linking so as to form a relatively stable dispersion. This dispersion is then cross-linked using the cross-linking agent. This pre-adsorption and pre-stabilisation in particular distinguishes the present invention from coacervation approaches whereby a polymer or prepolymer (which is not a dispersant) is mixed with a particulate solid, a liquid medium and the cross-linker and only during or after cross-linking does the resultant cross-linked polymer precipitate onto the particulate solid.

In embodiments where the dispersant has an acid value from 130 to 320 mg KOH/g the cross-linking agent may have no oligomeric dispersing groups, but preferably the cross-linking agent has one or more oligomeric dispersing groups.

The term oligomer as used herein is not limited to any upper molecular weight or to any upper limit regarding the number of repeat units.

We have surprisingly found that cross-linking agents having one or more oligomeric dispersing group increase the stability of the resulting encapsulated particulate solid. This increased stability is especially useful in the demanding liquid vehicles used in inkjet printing, with more difficult to disperse particulate solids and/or with dispersants having acid values of less than 125mg KOH/g.

The oligomeric dispersing group preferably is or comprises polyalkyleneoxide, more preferably a polyC₂₋₄-alkyleneoxide and especially a polyethyleneoxide. The polyalkyleneoxide groups provide stearic stabilisation which improves the stability of the resulting encapsulated particulate solid.

Preferably the polyalkyeneoxide contains from 3 to 200, more preferably from 5 to 50 alkyleneoxide and especially from 5 to 20 alkyleneoxide repeat units.

In all embodiments the preferred cross-linking agents having at least two epoxy groups are epichlorohydrin derivatives.

Preferred cross-linking agents have two epoxy groups.

Preferred cross-linking agents having two epoxy groups and zero oligomeric dispersing groups are ethylene glycol diglycidyl ether, resorcinol diglycidyl ether, neopentyl glycol diglycidyl ether, 1,6- hexanediol diglycidyl ether, hydrogenated bisphenol A diglycidyl ether and polybutadiene diglycidyl ether.

Preferred cross-linking agents having two epoxy groups and one or more oligomeric dispersing groups are diethylene glycol diglycidyl ether, poly ethylene glycol diglycidyl ether, dipropylene glycol diglycidyl ether and poly propylene glycol diglycidyl ether.

Preferred cross-linking agents having three or more epoxy groups and zero oligomeric dispersing groups are sorbitol polyglycidyl ether, polyglycerol polyglycidyl ether, pentaerythritol polyglycidyl ether, diglycerol polyglycidyl ether, glycerol poly glycidyl ether and trimethylolpropane polygycidyl ether.

When the dispersant comprises only one carboxylic acid group the cross-linking agent is preferably a polymer comprising at least ten epoxy groups and optionally one or more oligomeric dispersing group. A preferred example of a polymeric cross-linking agent is a polyvinyl copolymer comprising glycidyl (meth)acrylate.

Preferably the cross-linking agent is soluble in the liquid medium, especially where the liquid medium is aqueous. More preferably the cross-linking agent has a solubility in water such that a mixture of water and cross-linking agent containing 1 % by weight of the cross-linking agent is in the form of a solution at a temperature of 25°C.

We have found that cross-linking agents which are substantially insoluble in the liquid medium tend to cause coagulation or agglomeration of the particulate solid.

The cross-linking agent preferably has one or more ethylene glycol groups to help solubilise the cross-linking agent.

One or more cross-linking agents can be used to cross-link the carboxylic acid group(s) in the dispersant.

When more than one cross-linking agent is used these may have the same or different numbers of epoxy groups.

It is preferred that the only cross-linking groups present on the cross-linking agent are epoxy groups.

Thus in one embodiment the present invention provides a process for preparing an encapsulated particulate solid dispersed in a liquid medium comprising cross-linking a dispersant with a cross-linking agent in the presence of a particulate solid and the liquid medium, thereby encapsulating the particulate solid within the cross-linked dispersant, wherein:
a) the dispersant has at least one carboxylic acid group;
b) the cross-linking agent has at least two epoxy groups and one or more ethylene glycol groups; and
c) the cross-linking reaction between the carboxylic acid and epoxy groups is performed at a temperature of less than 100°C and a pH of at least 6.

In a further embodiment the cross-linking agent has one or more oligomeric dispersing group and the dispersant has an acid value of at least 125 mg KOH/g. We have found that the combined effects from both the oligomeric dispersing groups in the cross-linking agent and the dispersant having an acid value of at least 125mg KOH/g provides encapsulated particulate solids with excellent stability in liquid vehicles.

It is known that the reaction between carboxylic acid groups and epoxy groups can be used as a means of cross-linking. However, such reactions tend to be done with Lewis acids and/or at low pH (less than 5) and at temperatures of approximately 150°C. We have surprisingly found that when the epoxy/carboxylic acid cross-linking reaction is effected at a pH of at least 6 the reaction can be performed at temperatures of less than 100°C. Surprisingly, such cross-linking reaction can also be performed in a liquid medium which is or comprises water. This also is unexpected given that water at basic pH would be expected to tend to hydrolyse the epoxy groups and much reduce the effectiveness of the cross-linking reaction.

Low temperatures for cross-linking are preferred as this results in lower levels of flocculation and particle size growth of the particulate solid in the liquid medium. Preferably, the cross-linking reaction is performed at a temperature from 10°C to 90°C and more preferably from 30°C to 70°C.

The pH for the cross-linking reaction is preferably from 7 to 14, more preferably from 7 to 12 and especially preferably from 8 to 11.

Before the cross-linking reaction starts the carboxylic acid groups in the dispersant may be in the form of the salt and/or the free acid as hereinbefore described. However in order to better effect the reaction between carboxylic acid groups and epoxy groups at a temperature of below 100°C we have found that it is important that at least some of the carboxylic acid groups are present in the form of the salt. The salt form may be obtained by adjusting the pH (of all the components present in the process according to the first aspect of the present invention) to at least 6 prior to cross-linking.

The pH adjustment can be done by adding any suitable base. Preferred bases include metal hydroxides, oxides, carbonates as well as amines, substituted amines and alkanolamines. Especially preferred bases are the alkali metal hydroxides, ammonia, triethylamine and triethanolamine. An especially preferred alkali metal hydroxide is potassium hydroxide.

The time for the cross-linking reaction depends to some extent on the temperature and the pH. However, a preferred time is from 1 to 24 hours, more preferably from 1 to 8 hours.

Preferably, the cross-linking is performed by a process comprising mixing the particulate solid, the dispersant, the cross-linking agent and the liquid medium.

The components may be mixed by any suitable method, e.g. shaking, stirring and so on.

Preferably, the cross-linking is performed by a process comprising mixing the a composition comprising the following components in the specified proportions:
a) 30 to 99.7 parts, preferably 50 to 97 parts of the liquid medium;
b) 0.1 to 50 parts, preferably 1 to 30 parts of the particulate solid;
c) 0.1 to 30 parts, preferably 1 to 30 parts of the dispersant; and
d) 0.001 to 30 parts, preferably 0.01 to 10 parts of the cross-linking agent;
wherein the parts are by weight and the sum of the parts a) + b) + c) + d) = 100.

The particulate solid, the liquid medium and the dispersant may be mixed in any order or simultaneously. The mixture may be subjected to a mechanical treatment to reduce the particle size of the particulate solid to a desired size, for example by ball milling, bead milling, gravel milling or by more elaborate techniques such as ultrasonication, microfluidizing (using a Microfluidics^{™} machine) or using hydrodynamic cavitation (using for example the CaviPro^{™} device) until a dispersion is formed. The particulate solid may be treated to reduce its particle size independently or in admixture with the liquid medium and/or the dispersant. The remaining component or components may then be added to provide a mixture suitable for the present invention.

If desired the mixture may be filtered or centrifuged to remove any poorly dispersed or oversized particulate material prior to cross-linking. In particular, the process preferably comprises filtering a mixture comprising the dispersant, particulate solid and liquid medium prior to cross-linking, preferably through a filter having a pore size of less than 10, more preferably less than 5 and especially less than 1 micron.

If the cross-linking agent is present during mechanical treatment of the particulate solid this can result in undesirable pre-cross-linking of the dispersion before the particle size of the solid has been fully reduced. When the particulate solid is milled in the presence of the dispersant and the liquid medium the temperature is preferably not greater than 40°C and especially not greater than 30°C.

The cross-linking agent is preferably added to a mixture comprising the particulate solid, dispersant and liquid medium after any mechanical treatment to reduce the particle size of the particulate solid. Cross-linking can occur whilst the cross-linking agent is being added but it is more preferred that at least the greater part of the cross-linking occurs after complete addition of the cross-linking agent. This facilitates more uniform dispersion of the cross-linking agent throughout the composition and results in more uniform cross-linking.

To inhibit cross-linking whilst the cross-linking agent is being added to a mixture comprising the particulate solid, dispersant and liquid medium, the cross-linking agent is preferably added to said mixture at a temperature below 40°C and especially below 30°C.

The process preferably results in an encapsulated particulate solid having a Z-average particle size of at most 50% greater than the Z-average particle size of the particulate solid prior to addition of the cross-linking agent.

Preferably, the encapsulated particulate solids have a Z-average particle size of less than 500nm, more preferably from 10 to 500nm and especially from 10 to 300nm. Conventionally, particulate solids having a Z-average size of less than 500nm are difficult to effectively stabilise. Particulate solids of this size are particularly useful in paints and inks, especially ink jet printing inks.

The Z-average particle size may be measured by any means known but a preferred method is by photo correlation spectroscopy devices available from Malvern^{™} or Coulter^{™}.

The process of the present invention is capable of being performed at moderate temperatures and with cross-linking agents having a good toxicology profile. The process provides reduced levels of aggregation and/or flocculation and minimal growth in the particle size of the particulate solid. This process is therefore particularly useful in applications where small particle size is important. For example, in ink jet printing large particles are undesirable because they can block the tiny nozzles used in print heads. Furthermore, the ability to use low temperatures enables encapsulation and dispersion of temperature-sensitive particulate solids, e.g. pharmaceuticals and agrochemicals.

Any small amounts of aggregated and flocculated material which may be formed during the encapsulation process are preferably measured by filtration and weighing of the dry flocculated and aggregated material retained on the filter. Preferably a filter having a pore size of 1 micron is used for this. It is also preferable to pre-filter the components used in the process according to the first aspect of the present invention prior to heating and starting the cross-linking reaction. Again this filter preferably has a pore size of 1 micron. In this way only the aggregated and flocculated material which results from the cross-linking reaction is measured rather than also measuring material originating from, for example, insufficient mechanical dispersion of the particulate solid.

It is also possible to use optical microscopy either by visual qualitative assessment or by quantitative digital image capture and analysis to measure the extent of aggregation and/or flocculation during the encapsulation reaction.

According to a second aspect of the present invention there is provided an encapsulated particulate solid dispersed in the liquid medium obtainable or obtained by the process of the first aspect of the present invention.

The resultant encapsulated particulate solid is itself particulate. This is to say, this invention does not relate to any form of cross-linking which takes place on drying or which gels the components into an immobile solid or semi-solid.

It is preferred that substantially all of the encapsulated particulate solid particles comprise a single solid particle encapsulated within a cross-linked dispersant.

If desired the process may further comprise the step of isolating the encapsulated particulate solid from the liquid medium. This is preferably achieved by, for example, evaporating the liquid medium, or less preferably by precipitation or flocculation of the encapsulated particulate solid followed by filtration.

Preferred methods of evaporation include freeze drying, spray drying and agitated drying. Preferred methods of precipitation and flocculation include the addition of metal salts and centrifugation.

According to a third aspect of the present invention there is provided an encapsulated particulate solid obtainable or obtained by the process of isolating said encapsulated particulate solid from the encapsulated particulate solid dispersed in the liquid medium according to the second aspect of the present invention.

The encapsulated particulate solid prepared by the process according to the first aspect of the present invention is useful for providing compositions comprising a liquid vehicle and an encapsulated particulate solid. The term "liquid vehicle" refers to the liquid or liquids present in an end use formulation, for example, an ink, paint or the like.

Preferably, the encapsulated particulate solid is dispersed in the liquid vehicle. More preferably said dispersion is substantially uniform.

Thus, according to a fourth aspect of the present invention there is provided a composition comprising a liquid vehicle and an encapsulated particulate solid obtained or obtainable by the process according to the first aspect of the present invention.

The compositions may be prepared by adding one or more liquids to the product of the process and/or by concentrating the product of the process and/or or by isolating the product of the process and mixing the isolated encapsulated particulate solid with a liquid vehicle. Preferably, the composition is prepared by adding one or more desired liquid vehicle components to the encapsulated particulate solid dispersed in the liquid medium resulting from the process according to the first aspect of the present invention. This latter process, which does not isolate the encapsulated particulate solid (in a "dry" sate), tends to result in smaller particle size of the encapsulated particulate solid with the liquid vehicle.

Preferably, the above composition is an ink wherein the particulate solid is a colorant and more preferably a pigment.

The liquid vehicle may be identical to or different from the liquid medium used in the process for preparing the encapsulated particulate solid. That is to say in some instances the product of the process of the present invention may be directly useful in an end use application such as an ink without the need to change the liquid components in any way.

It is often desirable that the liquid vehicle comprises high proportions of water and that further liquids required to make the desired composition (e.g. an ink) are added after the process according to the first aspect of the present invention has been performed.

In the case of ink jet printing compositions it is preferable that the liquid vehicle comprises both water and an organic liquid which is preferably a water-miscible organic liquid. Preferred water-miscible organic liquids are as hereinbefore described. The preferred ratios of water to water-miscible organic liquid are as hereinbefore described

A preferred composition comprises:
a) from 0.1 to 50 parts, more preferably from 1 to 25 parts, of an encapsulated particulate solid obtainable or obtained by a process according to the first aspect of the present invention;
b) from 50 to 99.9 parts, more preferably from 99 to 75 parts, of a liquid vehicle comprising water and/or a water-miscible organic liquid;
wherein all parts are by weight and components a) and b) add to 100 parts.

The compositions of the present invention are particularly suitable for use in or as ink jet printing inks, especially where the particulate solid is a pigment.

In the case of ink jet printing, the composition according to the fourth aspect of the present invention preferably has a viscosity of less than 30mPa.s, more preferably less than 20mPa.s and especially less than 10mPa.s at a temperature of 25°C.

In the case of ink jet printing it is preferred that the composition according to the fourth aspect of the present invention has a surface tension from 20 to 65 dynes/cm, more preferably from 25 to 50 dynes /cm at a temperature of 25°C.

The ink jet printing compositions of the present invention may also comprise additional components suitable for use in ink jet printing inks, for example viscosity modifiers, pH buffers (e.g. 1:9 citric acid/sodium citrate) corrosion inhibitors, biocides, dyes and/or kogation reducing additives.

According to a fifth aspect of the present invention there is provided a process for printing an image on a substrate comprising applying a composition according to the fourth aspect of the present invention to the substrate, preferably by means of an ink jet printer.

According to a sixth aspect of the present invention there is provided a paper, a plastic film or a textile material printed with a composition according to the fourth aspect of the present invention, preferably by means of an ink jet printer. Preferred papers are plain or treated papers which may have an acid, alkaline or neutral character. Examples of commercially available papers include, Photo Paper Pro (PR101), Photo Paper Plus (PP101), Glossy Photo Paper (GP401), Semi Gloss Paper (SG101), Matte Photo Paper (MP101), (all available from Canon); Premium Glossy Photo Paper, Premium Semi gloss Photo Paper, ColorLife^{™}, Photo Paper, Photo Quality Glossy Paper, Double-sided Matte Paper, Matte Paper Heavyweight, Photo Quality Inkjet Paper, Bright White Inkjet Paper, Premium Plain Paper, (all available from Seiko Epson Corp); HP All-In-One Printing Paper, HP Everyday Inkjet Paper, HP Everyday Photo Paper Semi-glossy, HP Office Paper, HP Photo Paper, HP Premium High-Gloss Film, HP Premium Paper, HP Premium Photo Paper, HP Premium Plus Photo Paper, HP Printing Paper, HP Superior Inkjet Paper, (all available from Hewlett Packard Inc.); Everyday Glossy Photo Paper, Premium Glossy Photo Paper, (both available from Lexmark Inc.); Matte Paper, Ultima Picture Paper, Premium Picture Paper, Picture Paper, Everyday Picture Paper (available from Kodak Inc.). The plastic film may be opaque or transparent. Transparent plastic films which are suitable for use as overhead projector slides, include for example polyesters (especially polyethylene terephthalate), polycarbonates, polyimides, polystyrenes, polyether sulphones, cellulose diacetate and cellulose triacetate films.

According to a seventh aspect of the present invention there is provided an ink jet printer cartridge comprising a chamber and a composition according to the fourth aspect of the present invention wherein said composition is present in the chamber.

Encapsulated particulate solids obtainable or obtained by the process of the present invention may also be used in surface coatings and paints which comprise an encapsulated particulate solid, a liquid vehicle and a binder. The particulate solid is preferably a colorant, an extender or a filler. As with inks, the paint can be made using the isolated encapsulated particulate solid but it is more preferred to use the encapsulated particulate solid dispersed in the liquid medium which results from the process according to the first aspect of the invention.

Thus, according to an eighth aspect of the present invention there is provided a composition comprising an encapsulated particulate colorant, extender or filler obtainable or obtained by a process according to the first aspect of the present invention, a binder and a liquid vehicle. The binder is a polymeric material capable of binding the composition after the liquid medium has evaporated away and/or been absorbed into the substrate.

Suitable binders include natural and synthetic polymers. Preferred binders include poly(meth)acrylates, polystyrenics, polyesters, polyurethanes, alkyds, polysaccharides (e.g. cellulose) and proteins (e.g. casein). Preferably, the binder is present in the composition at more than 100%, more preferably 200%, even more preferably 300% and most preferably more than 400% based on the weight of the encapsulated particulate solid.

The invention is further illustrated by the following Examples in which all parts and percentages are by weight unless otherwise stated.

### Examples

### Preparation of Dispersant (1)

A monomer feed composition was prepared by mixing methacrylic acid (172 parts), methyl methacrylate (478 parts), 2-ethylhexyl methacrylate (350 parts) and isopropanol (375 parts). An initiator feed composition was prepared by mixing 2,2'-azobis(2-methylbutyronitrile) (22.05 parts) and isopropanol (187.5 parts).

Isopropanol (187.5 parts) was heated to 80°C in a reactor vessel, continuously stirred and purged with a nitrogen gas atmosphere. The monomer feed and the initiator feed compositions were slowly fed into the reactor vessel whilst stirring the contents, maintaining the temperature at 80°C and maintaining the nitrogen atmosphere. The monomer feed and the initiator feed were both fed into the reactor over 2 hours. The reactor vessel contents were maintained at 80°C for a further 4 hours before cooling to 25°C. The resulting dispersant was then isolated from the reactor vessel contents by rotary evaporation under reduced pressure. This was designated as Dispersant (1). Dispersant (1), was an acrylic copolymer which had a number average molecular weight of 11,865, an acid value of 112 mg KOH/g, a weight average molecular weight of 29,225 and a polydispersity of 2.5 as measured by GPC.

### Preparation of Dispersants (2) to (4)

### Step (i)

Monomer feed compositions (2) to (4) were prepared by mixing the components in each row of Table 1:

**Table 1**

| Monomer feed composition | methyl methacrylaye | methacrylic acid | 2-ethylhexyl methacrylate | Isopropanol |
|---|---|---|---|---|
| 2 | 478 | 172 | 350 | 375 |
| 3 | 478 | 172 | 350 | 375 |
| 4 | 478 | 172 | 350 | 375 |

### Step (ii)

Initiator feed compositions (2) to (4) were prepared by mixing the components in each row of Table 2:

**Table 2**

| Initiator feed composition | 2,2'-azobis(2-methylbutyronitrile) | Isopropanol |
|---|---|---|
| 2 | 93.71 | 187.5 |
| 3 | 37.48 | 187.5 |
| 4 | 22.05 | 187.5 |

### Step (iii)

### Polymerisation to prepare dispersants (2) to (4).

Dispersants (2) to (4) were prepared and isolated in exactly the same way as Dispersant (1) except that the monomer feed compositions (2) to (4) prepared in step (i) and the initiator feed compositions (2) to (4) prepared in step (ii) were used in place of those used in the preparation of Dispersant (1).

The molecular weights of Dispersants (2) to (4) as established by GPC were as tabulated in Table 3;

**Table 3**

| Dispersant | Weight average molecular weight | Number average molecular weight | Acid Value (mg KOH/g) |
|---|---|---|---|
| 2 | 10,452 | 5,422 | 112 |
| 3 | 19,803 | 11,111 | 112 |
| 4 | 28,992 | 15,422 | 112 |

### Dispersant Solutions (1) to (4)

Dispersants (1) to (4) (150 parts) were each dissolved in water (470 parts) and neutralised with potassium hydroxide aqueous solution to give an aqueous solution having a pH of about 9 This resulted in Dispersant Solutions (1) to (4) which contained approximately 24% by weight of Dispersant.

### Mill-base (1)

A particulate solid (C.I. Pigment Blue 15:3, 60 parts, ex Clariant) was mixed with Dispersant Solution (1) (340 parts). The mixture was milled in a Blackley mill for a period of 3 hours. This resulted in a mill-base designated as Mill-base (1) comprising a particulate solid of Z-average particle size of 170nm, a pH of 8.7 and a pigment content of 15% by weight.

### Mill-bases (2) to (8)

A particulate solid (C.I. Pigment Blue 15:3 or Carbon black) was mixed with one of the Dispersant solutions (2) to (4) as described in Table 4. This mixture was then made up to 400 parts with water. The mixture was milled in a vertical Blackley bead mill for several hours.

**Table 4**

| Mill-base | Dispersant | Colour | Pigment | Pigment amount (parts) | Neat Dispersant amount (parts) | Milling time (hrs) | Z-average particle Size (nm) |
|---|---|---|---|---|---|---|---|
| 2 | 2 | Cyan | C.I Pigment Blue 15:3 | 40 | 34 | 4 | 101 |
| 3 | 3 | Cyan | C.I Pigment Blue 15:3 | 40 | 22 | 4 | 104 |
| 4 | 4 | Cyan | Blue 15:3 Blue 15:3 | 40 | 28 | 4 | 118 |
| 5 | 4 | Black | M700 | 40 | 22 | 5 | 153 |
| 6 | 4 | Black | N1601Q | 40 | 22 | 5 | 133 |
| 7 | 4 | Black | N160IQ | 40 | 22 | 5 | 133 |
| 8 | 4 | Black | M700 | 40 | 22 | 5 | 153 |

| | | | | | | | |
|---|---|---|---|---|---|---|---|
| C.I. Pigment Blue 15:3 is a copper phthalocyanine-based pigment. M700 is Monarch^{™} 700 a carbon black available from Cabot Corp. N160IQ is Nipex^{™} 160IQ a carbon black available from Degussa. | | | | | | | |

The amount of Dispersant indicated in Table 4 is that of the neat dispersant not the dispersant solution. Thus, for example, 1 part of neat Dispersant corresponds to 5 parts of a Dispersant solution containing 20% by weight of Dispersant.

After milling the final Z-average particle size was measured. The results are tabulated in the last column of Table 4.

### Example 1 - Encapsulated particulate solid dispersion (1)

Polyethylene glycol diglycidyl ether having a number averaged molecular weight of about 526 (i.e. the cross-linker) (0.229 parts supplied by Aldrich having the Catalogue No 47,569-6) was slowly added to Mill-base (1) (50 parts) at a temperature of about 25°C, the mixture was then heated and stirred for 6 hours at a temperature of 40 to 50°C. The pH of the mixture during the cross-linking reaction was 9.5. The resultant encapsulated particulate solid dispersion (1) had a Z-average particle size of 170nm which had not increased at all.

### Examples 2 to 8 - Encapsulated particulate solid dispersions (2) to (8)

Encapsulated particulate solid dispersions (2) to (8) were prepared in exactly the same way as Encapsulated particulate solid dispersion (1) except that in place of the Millbase 1 there was used the Millbase indicated in Table 5 and the amounts of polyethylene glycol diglycidyl ether used and the pH during the cross-linking reaction were a described in Table 5:

**Table 5**

| Millbase | Encapsulated particulate solid dispersion | Polyethylene glycol diglycidyl ether amount (parts) | pH during cross-linking reaction | Z-average Particle size after cross-linking (nm) | % increase in Z-average particle size |
|---|---|---|---|---|---|
| 2 | 2 | 2.515 | 9.6 | 133 | 32 |
| 3 | 3 | 1.627 | 9.2 | 116 | 12 |
| 4 | 4 | 1.726 | 9 | 128 | 8 |
| 5 | 5 | 1.627 | 9.3 | 154 | 1 |
| 6 | 6 | 1.627 | 8.8 | 142 | 7 |
| 7 | 7 | 1.899 | 8.8 | 143 | 8 |
| 8 | 8 | 1.356 | 9.3 | 157 | 3 |

The resulting Z-average particle size of the encapsulated particulate solid and the % increase in the Z-average particle size from the mill-base to the encapsulated particulate solid were as described in Table 5. In all cases the cross-linking reaction forming the encapsulated particulate solid resulted in only minor increases in the Z-average particle size of the particulate solid.

### Testing the stability of the Encapsulated particulate solid dispersions and the mill-bases

Encapsulated particulate solid dispersions (2) to (8) and mill-bases (2) to (8) were tested for their stability by mixing each dispersion or mill-base (containing 3 parts of neat particulate solid) with butyl cellosolve^{™} (10 parts), butyl carbitol^{™} (16 parts), pyrrolidone (5 parts), surfactant (1 part) and sufficient water to give a total of 100 parts. The mixtures so formed were ink jet printing inks containing quite large amounts of water-miscible organic liquid (approximately 31% by weight based on the total ink).

**Table 6**

| Ink jet printing ink derived from | Increase in Z-average particle size (nm) after storage | |
|---|---|---|
| | 1wk @ 5°C | 1 wk @ 60°C |
| Mill-base 2 | 216* | 216* |
| Encapsulated particulate solid dispersion 2 | 0 | 0 |
| Mill-base 3 | 298* | 298* |
| Encapsulated particulate solid dispersion 3 | 0 | 0 |
| Mill-base 4 | 180* | 180* |
| Encapsulated particulate solid dispersion 4 | 0 | 2 |
| Mill-base 5 | 41 | 462 |
| Encapsulated particulate solid dispersion 5 | 4 | 4 |
| Mill-base 6 | 287 | 200 |
| Encapsulated particulate solid dispersion 6 | 0 | 1 |
| Mill-base 7 | 287 | 200 |
| Encapsulated particulate solid dispersion 7 | 4 | 0 |
| Mill-base 8 | 41 | 462 |
| Encapsulated particulate solid dispersion 8 | 4 | 4 |

| | | |
|---|---|---|
| * - means the ink viscosity increased dramatically during storage. | | |

As can be seen from Table 6, the ink jet printing inks containing encapsulated particulate solid dispersions (2) to (8) showed a much lower increase in Z-average particle size after storage than the inks containing unencapsulated millbases and therefore the inks containing encapsulated particulate solid dispersions has higher stability.

### Example 9 - Study into Effect of Acid Value on Stability

In this example the effect of acid value on ink stability was investigated. The particular pigment chosen in this example is one which is much more difficult to stabilise than the pigments used in previous examples so as to highlight any differences acid value may have on stability.

### Dispersants 9 and 10 having AV's of 154 and 112 respectively were prepared as follows:

A monomer feed composition was prepared by mixing methacrylic acid MAA, methyl methacrylate MMA, 2-ethylhexylmethacrylate 2EHMA and isopropanol. An initiator feed composition was prepared by mixing 2,2'-azobis(2-methylbutyronitrile) AZBN and isopropanol (187.5 parts). The monomer and initiator parts by weight are in Table 7:

**Table 7**

| Dispersant | MMA (parts) | MAA (parts) | 2EHMA (parts) | AZBN (parts) | Mw | Mn | AV |
|---|---|---|---|---|---|---|---|
| Dispersant 9 | 478 | 172 | 350 | 22.05 | 30048 | 17119 | 154 |
| Dispersant 10 | 413.5 | 236.5 | 350 | 22.05 | 30105 | 16005 | 112 |

Isopropanol (187.5 parts) was heated to 80°C in a reactor vessel, continuously stirred and purged with a nitrogen gas atmosphere. The monomer feed and the initiator feed compositions were slowly fed into the reactor vessel whilst stirring the contents, maintaining the temperature at 80°C and maintaining the nitrogen atmosphere. The monomer feed and the initiator feed were both fed into the reactor over 2 hours. The reactor vessel contents were maintained at 80°C for a further 4 hours before cooling to 25°C. The dispersant was then isolated from the reactor vessel contents by rotary evaporation under reduced pressure. The Mw and Mn and acid values for both dispersants are given in Table 7.

### Dispersant Solution (9) (AV 154)

Dispersant 9 (150 parts) was dissolved in water and neutralised with potassium hydroxide aqueous solution to give an aqueous solution of pH 10.1 which was designated as Dispersant Solution (9). The polymer content was 30.6%

### Dispersant Solution (10) (AV 112)

Dispersant 10 (150 parts) was dissolved in water and neutralised with potassium hydroxide aqueous solution to give an aqueous solution of pH 10.9 which was designated as Dispersant Solution (10). The polymer content was 21.2%

### Pigment Dispersion (9)

Pigment Blue 15:4 aqueous paste (ex. Sun Chemicals, 260 parts) was mixed with Dispersant solution (9) (147 parts) and water (192 parts). The mixture was milled in a Mini-Zeta bead mill for a period of 3 hours. The dispersion had a particle size (d90) of 100nm. The dispersion had a pigment content of 15% by weight.

### Pigment Dispersion (10)

Pigment Blue 15:4 aqueous paste (ex. Sun Chemicals, 260 parts) was mixed with Dispersant solution (10) (212 parts) and water (127 parts). The mixture was milled in a Mini-Zeta bead mill for a period of 3 hours. The dispersion had a particle size (d90) of 115nm. The dispersion had a pigment content of 15% by weight

### Encapsulated Particulate Solid Dispersions (9) and (10)

Polyethylene glycol diglycidyl ether (the cross-linker, 0.35 parts) was slowly added to each Pigment Dispersion (70 parts) at a temperature of about 25°C, the mixture was then heated and stirred for 6 hours at a temperature of 50°C. The particle size, pH and viscosity of the dispersions are shown in Table 8. All dispersions had low viscosity and small particle size, as shown in Table 8:

**Table 8**

| | | Initial | | | |
|---|---|---|---|---|---|
| | Acid Value | D90 /nm | d[4,3] /nm | Viscosity /cP | pH |
| Encapsulated Particulate Solid Dispersion (9) | 154 | 108 | 78 | 22.2 | 10.82 |
| Encapsulated Particulate Solid Dispersion (10) | 112 | 126 | 86 | 27.7 | 10.64 |

### Evaluation of Stability in Ink-Jet Inks

Encapsulated Particulate Solid Dispersions (9) and (10) were made up into inks 9 and 10 having the formulations described in Table 9:

**Table 9**

| Ingredient | Ink 9 (parts) | Ink 10 (parts) |
|---|---|---|
| 2-Pyrrolidinone | 5 | 5 |
| Butyl Cellusolve^{™} | 10 | 10 |
| Butyl Carbitol^{™} | 16 | 16 |
| Surfactant | 1 | 1 |
| Encapsulated Particulate Solid Dispersion (9) | 20 | 0 |
| Encapsulated Particulate Solid Dispersion (10) | 0 | 20 |
| Water | 48 | 48 |
| *Total* | *100* | *100* |

Inks 9 and 10 were evaluated for stability by monitoring of particle size growth or viscosity following storage for 1 week at 60°C. The lower the change in the particle size or viscosity, the more stable the ink. The results of this evaluation are shown in Table 10:

**Table 10**

| | | Initial | | | | 7 Days @ 60C | | | | | |
|---|---|---|---|---|---|---|---|---|---|---|---|
| Initial Acid Value | Acid Value | Particle size d90/nm | Particle size d[4,3]/nm | Viscosity (cP) | PH | Particle size d90/nm | % Change in d90 | Particle size d[4,3]/nm | % Change in d[4,3] | Viscosity in (cP) | % Change viscosity |
| Ink 9 | 154 | 98 | 76 | 7.76 | 9.45 | 100 | 2.04 | 78 | 2.63 | 7.31 | -5.8 |
| Ink 10 | 112 | 118 | 81 | 12.2 | 9.36 | 706 | 498 | 275 | 239.51 | 25.9 | 112.3 |

| | | | | | | | | | | | |
|---|---|---|---|---|---|---|---|---|---|---|---|
| d90 and d[4,3] are volume mean particle diameters. | | | | | | | | | | | |

The above table shows that Ink 9 derived from the dispersant of AV 154 mg KOH/g had greater stability than Ink 10 derived from the dispersant of AV 112 mg KOH/g.

## Claims

1. A process for preparing an encapsulated particulate solid dispersed in a liquid medium comprising cross-linking a dispersant with a cross-linking agent in the presence of a particulate solid and the liquid medium, thereby encapsulating the particulate solid within the cross-linked dispersant, wherein :
a) the dispersant adsorbs onto the particulate solid prior to cross-linking and the dispersant has at least one carboxylic acid group; and
b) the cross-linking agent has at least two epoxy groups;
wherein the cross-linking agent has one or more oligomeric dispersing group and/or the dispersant has an acid value from 130 to 320 mg KOH/g.

2. A process according to claim 1 wherein at least some of the carboxylic acid groups in the dispersant are in the form of a salt.

3. A process according to any one of the preceding claims wherein the dispersant has an acid value of from 135 to 250 mg KOH/g.

4. A process according to any one of the preceding claims wherein the oligomeric dispersing group is or comprises polyalkyleneoxide.

5. A process according to claim 4 wherein the polyalkyeneoxide contains from 3 to 200 alkyleneoxide repeat units.

6. A process according to claim 5 wherein the polyalkyleneoxide contains from 5 to 20 alkyleneoxide repeat units.

7. A process according to any one of claims 4 to 6 wherein the polyalkyeneoxide is or comprises polyethyleneoxide.

8. A process according to any one of the preceding claims wherein the cross-linking reaction between the carboxylic acid and epoxy groups is performed at a temperature of less than 100°C and a pH of at least 6.

9. A process according to any one of the preceding claims wherein the cross-linking agent is soluble in the liquid medium.

10. A process according to any one of the preceding claims wherein the cross-linking agent has two epoxy groups.

11. A process according to any one of the preceding claims wherein the cross-linking reaction is performed at a temperature of from 30°C to 70°C.

12. A process according to any one of the preceding claims wherein the cross-linking reaction is performed at a pH of from 7 to 12.

13. A process for preparing an encapsulated particulate solid dispersed in a liquid medium according to claim 1 wherein :
a) the dispersant has at least one carboxylic acid group;
b) the cross-linking agent has at least two epoxy groups and one or more ethylene glycol groups; and
c) the cross-linking reaction between the carboxylic acid and epoxy groups is performed at a temperature of less than 100°C and a pH of at least 6.

14. A process according to any one of the preceding claims wherein cross-linking is performed by a process comprising mixing a composition comprising the following components:
a) 30 to 99.7 parts of the liquid medium;
b) 0.1 to 50 parts of the particulate solid;
c) 0.1 to 30 parts of the dispersant; and
d) 0.001 to 30 parts of the cross-linking agent;
wherein the parts are by weight and the sum of the parts a) + b) + c) + d) = 100.

15. An encapsulated particulate solid dispersed in the liquid medium obtainable or obtained by the process according to any one of the preceding claims.

16. A process according to any one of claims 1 to 14 comprising the further step of isolating the resultant encapsulated particulate solid from the liquid medium.

17. An encapsulated particulate solid obtained or obtainable by a process according to claim 16.

18. A composition comprising a liquid vehicle and an encapsulated particulate solid obtained or obtainable by the process according to any one of claims 1 to 14 and 16.

19. A composition according to claim 18 having a viscosity of less than 30mPa.s at a temperature of 25°C.

20. A composition according to claim 18 or 19 wherein the liquid vehicle comprises water and water-miscible organic liquid in a weight ratio of 99:1 to 5:95.

21. A process for printing an image on a substrate comprising applying a composition according to any one of claims 18, 19 or 20 to the substrate.

22. A process according to claim 21 wherein the printing is performed by means of an ink jet printer.

23. A paper, a plastic film or a textile material printed with a composition according to any one of claims 18, 19 or 20.

24. An ink jet printer cartridge comprising a chamber and a composition wherein the composition is present in the chamber and the composition is as claimed in any one of claims 18, 19 or 20.

25. A composition according to any one of claims 18 to 20 wherein the particulate solid is a colorant.

## Patentansprüche

1. Verfahren zur Herstellung eines in einem flüssigen Medium dispergierten, umhüllten partikulären Feststoffs, bei dem man ein Dispergiermittel in Gegenwart eines partikulären Feststoffs und des flüssigen Mediums mit einem Vernetzungsmittel vernetzt und dadurch den partikulären Feststoff mit dem vernetzten Dispergiermittel umhüllt, wobei:
a) das Dispergiermittel vor dem Vernetzen auf den partikulären Feststoff aufzieht und das Dispergiermittel mindestens eine Carbonsäuregruppe aufweist und
b) das Vernetzungsmittel mindestens zwei Epoxygruppen aufweist,
wobei das Vernetzungsmittel mindestens eine oligomere dispergierende Gruppe und/oder das Dispergiermittel eine Säurezahl von 130 bis 320 mg KOH/g aufweist.

2. Verfahren nach Anspruch 1, bei dem die Carbonsäuregruppen des Dispergiermittels zumindest zum Teil in Salzform vorliegen.

3. Verfahren nach einem der vorhergehenden Ansprüche, bei dem das Dispergiermittel eine Säurezahl von 135 bis 250 mg KOH/g aufweist.

4. Verfahren nach einem der vorhergehenden Ansprüche, bei dem die oligomere dispergierende Gruppe Polyalkylenoxid ist oder umfaßt.

5. Verfahren nach Anspruch 4, bei dem das Polyalkylenoxid 3 bis 200 Alkylenoxid-Repetiereinheiten enthält.

6. Verfahren nach Anspruch 5, bei dem das Polyalkylenoxid 5 bis 20 Alkylenoxid-Repetiereinheiten enthält.

7. Verfahren nach einem der Ansprüche 4 bis 6, bei dem das Polyalkylenoxid Polyethylenoxid ist oder umfaßt.

8. Verfahren nach einem der vorhergehenden Ansprüche, bei dem die Vernetzungsreaktion zwischen Carbonsäure- und Epoxygruppe bei einer Temperatur von weniger als 100°C und einem pH-Wert von mindestens 6 erfolgt.

9. Verfahren nach einem der vorhergehenden Ansprüche, bei dem sich das Vernetzungsmittel in dem flüssigen Medium löst.

10. Verfahren nach einem der vorhergehenden Ansprüche, bei dem das Vernetzungsmittel zwei Epoxygruppen aufweist.

11. Verfahren nach einem der vorhergehenden Ansprüche, bei dem die Vernetzungsreaktion bei einer Temperatur von 30°C bis 70°C erfolgt.

12. Verfahren nach einem der vorhergehenden Ansprüche, bei dem die Vernetzungsreaktion bei einem pH-Wert von 7 bis 12 erfolgt.

13. Verfahren zur Herstellung eines in einem flüssigen Medium dispergierten, umhüllten partikulären Feststoffs gemäß Anspruch 1, bei dem
a) das Dispergiermittel mindestens eine Carbonsäuregruppe aufweist,
b) das Vernetzungsmittel mindestens zwei Epoxygruppen und mindestens eine Ethylenglykolgruppe aufweist und
c) die Vernetzungsreaktion zwischen Carbonsäure- und Epoxygruppe bei einer Temperatur von weniger als 100°C und einem pH-Wert von mindestens 6 erfolgt.

14. Verfahren nach einem der vorhergehenden Ansprüche, bei dem das Vernetzen nach einem Verfahren erfolgt, bei dem man eine Zusammensetzung, umfassend folgende Komponenten:
a) 30 bis 99,7 Teile des flüssigen Mediums,
b) 0,1 bis 50 Teile des partikulären Feststoffs
c) 0,1 bis 30 Teile des Dispergiermittels und
d) 0,001 bis 30 Teile des Vernetzungsmittels,
wobei es sich bei den Teilen um Gewichtsteile handelt und die Summe der Teile a) + b) +c) + d) = 100 ergibt, mischt.

15. In dem flüssigen Medium dispergierter, umhüllter partikulärer Feststoff, erhältlich oder erhalten nach dem Verfahren gemäß einem der vorhergehenden Ansprüche.

16. Verfahren nach einem der Ansprüche 1 bis 14, bei dem man zusätzlich den resultierenden umhüllten partikulären Feststoff aus dem flüssigen Medium isoliert.

17. Umhüllter partikulärer Feststoff, erhalten oder erhältlich nach einem Verfahren gemäß Anspruch 16.

18. Zusammensetzung, umfassend einen flüssigen Träger und einen umhüllten partikulären Feststoff, erhalten oder erhältlich nach dem Verfahren gemäß einem der Ansprüche 1 bis 14 und 16.

19. Zusammensetzung nach Anspruch 18 mit einer Viskosität von weniger als 30 mPa.s bei einer Temperatur von 25°C.

20. Zusammensetzung nach Anspruch 18 oder 19, bei der der flüssige Träger Wasser und wassermischbare organische Flüssigkeit in einem Gewichtsverhältnis von 99:1 bis 5:95 umfaßt.

21. Verfahren zur druckmäßigen Bebilderung eines Substrats, bei dem man das Substrat mit einer Zusammensetzung gemäß einem der Ansprüche 18, 19 oder 20 beaufschlagt.

22. Verfahren nach Anspruch 21, bei dem das Drucken mittels eines Tintenstrahldruckers erfolgt.

23. Papier, Kunststoffolie oder Textilmaterial, bedruckt mit einer Zusammensetzung gemäß einem der Ansprüche 18, 19 oder 20.

24. Tintenstrahldruckerpatrone mit Kammer und Zusammensetzung, bei der die Zusammensetzung in der Kammer vorliegt und einem der Ansprüche 18, 19 oder 20 entspricht.

25. Zusammensetzung nach einem der Ansprüche 18 bis 20, bei der der partikuläre Feststoff ein Farbmittel ist.

## Revendications

1. Procédé de préparation d'un solide particulaire encapsulé dispersé dans un milieu liquide, comprenant la réticulation d'un agent dispersant avec un agent de réticulation en présence d'un solide particulaire et du milieu liquide, encapsulant ainsi le solide particulaire avec l'agent dispersant réticulé, dans lequel :
a) l'agent dispersant s'adsorbe sur le solide particulaire avant la réticulation et l'agent dispersant renferme au moins un groupe acide carboxylique ; et
b) l'agent de réticulation renferme au moins deux groupes époxy ;
où l'agent de réticulation renferme un ou plusieurs groupes dispersants oligomères et/ou l'agent dispersant présente un indice d'acide de 130 à 320 mg KOH/g.

2. Procédé selon la revendication 1, dans lequel au moins certains des groupes acide carboxylique dans l'agent dispersant sont sous la forme d'un sel.

3. Procédé selon l'une quelconque des revendications précédentes, dans lequel l'agent dispersant présente un indice d'acide de 135 à 250 mg KOH/g.

4. Procédé selon l'une quelconque des revendications précédentes, dans lequel le groupe dispersant oligomère est ou comprend du polyalkylène-oxyde.

5. Procédé selon la revendication 4, dans lequel le polyalkylène-oxyde renferme de 3 à 200 motifs récurrents alkylène-oxyde.

6. Procédé selon la revendication 5, dans lequel le polyalkylène-oxyde renferme de 5 à 20 motifs récurrents alkylène-oxyde.

7. Procédé selon l'une quelconque des revendications 4 à 6, dans lequel le polyalkylène-oxyde est ou comprend du polyéthylène-oxyde.

8. Procédé selon l'une quelconque des revendications précédentes, dans lequel la réaction de réticulation entre les groupes acide carboxylique et époxy est effectuée à une température inférieure à 100 °C et à un pH d'au moins 6.

9. Procédé selon l'une quelconque des revendications précédentes, dans lequel l'agent de réticulation est soluble dans le milieu liquide.

10. Procédé selon l'une quelconque des revendications précédentes, dans lequel l'agent de réticulation renferme deux groupes époxy.

11. Procédé selon l'une quelconque des revendications précédentes, dans lequel la réaction de réticulation est effectuée à une température de 30 °C à 70 °C.

12. Procédé selon l'une quelconque des revendications précédentes, dans lequel la réaction de réticulation est effectuée à un pH de 7 à 12.

13. Procédé de préparation d'un solide particulaire encapsulé dispersé dans un milieu liquide selon la revendication 1, dans lequel:
a) l'agent dispersant renferme au moins un groupe acide carboxylique ;
b) l'agent de réticulation renferme au moins deux groupes époxy et un ou plusieurs groupes éthylène glycol ; et
c) la réaction de réticulation entre les groupes acide carboxylique et époxy est effectuée à une température inférieure à 100 °C et à un pH d'au moins 6.

14. Procédé selon l'une quelconque des revendications précédentes, dans lequel la réticulation est effectuée par un procédé comprenant le mélangeage d'une composition comprenant les composants suivants :
a) de 30 à 99,7 parties du milieu liquide ;
b) de 0,1 à 50 parties du solide particulaire ;
c) de 0,1 à 30 parties de l'agent dispersant ; et
d) de 0,001 à 30 parties de l'agent de réticulation ;
où les parties sont en poids et la somme des parties a) + b) + c) + d) = 100.

15. Solide particulaire encapsulé dispersé dans le milieu liquide, obtenu ou pouvant être obtenu par le procédé selon l'une quelconque des revendications précédentes.

16. Procédé selon l'une quelconque des revendications 1 à 14, comprenant l'étape supplémentaire d'isolation du solide particulaire encapsulé résultant du milieu liquide.

17. Solide particulaire encapsulé obtenu ou pouvant être obtenu par un procédé selon la revendication 16.

18. Procédé comprenant un véhicule liquide et un solide particulaire encapsulé obtenu ou pouvant être obtenu par le procédé selon l'une quelconque des revendications 1 à 14 et 16.

19. Composition selon la revendication 18, présentant une viscosité inférieure à 30 mPa.s à une température de 25 °C.

20. Composition selon la revendication 18 ou 19, dans laquelle le véhicule liquide comprend de l'eau et un liquide organique miscible à l'eau en un rapport pondéral de 99:1 à 5:95.

21. Procédé d'impression d'une image sur un substrat, comprenant l'application d'une composition selon l'une quelconque des revendications 18, 19 ou 20 sur le substrat.

22. Procédé selon la revendication 21, dans lequel l'impression est effectuée au moyen d'une imprimante à jet d'encre.

23. Papier, film plastique ou matière textile imprimé avec une composition selon l'une quelconque des revendications 18, 19 ou 20.

24. Cartouche d'imprimante à jet d'encre comprenant un compartiment et une composition, dans laquelle la composition est présente dans le compartiment et la composition est telle que revendiquée dans l'une quelconque des revendications 18, 19 ou 20.

25. Composition selon l'une quelconque des revendications 18 à 20, dans laquelle le solide particulaire est un colorant.
